# EUROPÄISCHE PATENTANMELDUNG

(11) **EP 2 011 934 A2**
(43) Veröffentlichungstag der Anmeldung: **07.01.2009**
(21) Anmeldenummer: 08015241.6
(22) Anmeldetag: 29.08.2008
(51) Int. Cl.: E04G 23/02, C04B 28/04, C04B 41/53

(54) **Baustoffplatte und Verfahren zum Entsalzen von Mauerwerken**

(30) Priorität: 02.07.2007 DE 202007009248 U
(71) Anmelder: Glatthaar Fertigkeller GmbH, 78713 Schramberg-Waldmössingen (DE)
(72) Erfinder: Müller, Thomas, 55469 Horn (DE)
(74) Vertreter: Klocke, Peter

(57) **Zusammenfassung**

Baustoffplatte mit einer Zusammensetzung, die einem Sanierungsputz für die Entsalzung entspricht. Zusammensetzung der Baustoffplatte entspricht den Erfordernissen für die Entsalzung. Mit der Baustoffplatte, sowie dem Verfahren zur Sanierung und der Verwendung der Baustoffplatte kann eine kostengünstige normgerechte wenig Schmutz verursachende Sanierung erfolgen, wobei auf der Baustoffplatte noch zusätzliche Beschichtungen oder farbgebende Mittel vorgesehen sein können. Die Baustoffplatte ermöglicht auch eine Teilsanierung und einen teilweisen Austausch nach Sättigung.

## Beschreibung

Die vorliegende Erfindung betrifft eine Baustoffplatte zum Aufbringen auf ein Mauerwerk sowie ein Verfahren zum Entsalzen eines sanierungsbedürftigen Mauerwerks. Die Erfindung betrifft außerdem noch die Verwendung der Baustoffplatte.

Durch Jahrzehnte andauernde Nutzung haben sich durch Feuchtigkeitsaufnahme aus Nutzung und Feuchtebeanspruchung Salze in Mauerwerksteilen angesammelt. Durch energetische Sanierungen (Außendämmungen, dichte Fenster etc.) und veränderte Beheizungsarten verändert sich das chemische und physikalische Verhalten von Mauerwerksteilen drastisch, so dass im Mauerwerk angesammelte Salze ihre schädigende Wirkung sehr schnell entfalten können. Durch hygroskopische Feuchte erfolgt eine andauernde und fortschreitende Vernässung von Mauerwerkstellen. Dadurch wird gesundheitsgefährdenden Schimmel und Vernässungsschäden erst die Grundlage für ihr Wachstum gegeben. Durch die Anlagerung der Bauwerksschädlichen Salze erfolgt weiterhin eine ununterbrochene Vernässung des Mauerwerks, da die Salze die in der Raumluft vorhandene Feuchtigkeit "ins Mauerwerk zehen", um sich lösen zu können. Damit wird allerdings zusätzlich Salz aus der Raumluftfeuchtigkeit eingelagert, was zu einem sich potenzierenden Schädigungsprozess führt. Durch die Feuchte in der Wand wird die Dämmwirkung drastisch herabgesetzt und die Bauteiloberfläche zu beheizten Räumen dementsprechend kalt, was wiederum einen zusätzlichen Tauwasseranfall zur Folge hat.

Um Gesundheitsgefahren vorzubeugen bzw. diese zu beseitigen und um die Bauwerksschädlichen Salze aus dem Wandquerschnitt zu entfernen und somit die hygroskopische Feuchteaufnahme zu unterbinden, werden verschiedene Verfahren angewandt. Im Grundsatz haben diese verfahren gemein, dass unabgebundene Putze (Sanierputze, Opferputze) auf die geschädigten Bauteilbereiche aufgebracht werden, damit die in der Wand befindlichen Salze innerhalb des Putzquerschnittes auskristallisieren können. Das Applizieren derartiger Putze erfolgt mehrlagig und ist an sehr viele Bedingungen geknüpft. Raumklimatische Maßnahmen sind ebenso für die gesamte Bauzeit von Nöten, wie sehr lange Trocknungszeiten zwischen den einzelnen Schichtaufträgen. Hochqualifizierte Facharbeiter sind nötig, um die Vorschriften weitestgehend anwenden zu können.

Aus diesen Gründen ist eine sach- und fachgerechte Applikation eines Sanierputzsystems der breiten Masse vorenthalten, da die finanziellen Aufwendungen von nur wenigen erbracht werden können. Resultat sind unfachgerecht und minderwertige Sanierputze, die ihre eigentlich zugedachte Wirkung nicht entfalten können und nach kurzer Zeit ebenfalls geschädigt sind. Die Kosten für die Instandsetzung unfachgerecht aufgebrachter Sanierputze betragen bundesweit mehrere 10 Millionen Euro.

Eine Nutzung der zu bearbeitenden Räumlichkeiten während der Bauphase ist aufgrund der Gesundheits- und Behaglichkeitsbeeinträchtigungen unmöglich.

Der vorliegenden Erfindung liegt daher die Aufgabe zugrunde, eine Möglichkeit vorzuschlagen, mit der die vorstehend erwähnten Nachteile beseitigt werden.

Diese Aufgabe wird erfindungsgemäß durch eine Baustoffplatte mit den Merkmalen des Anspruchs 1 sowie den Merkmalen des nebengeordneten Verfahrensanspruchs für die Sanierung gelöst. Weitere vorteilhafte Ausgestaltungen sind den jeweils rückbezogenen Unteransprüchen zu entnehmen. Die Aufgabe wird außerdem durch die beanspruchte Verwendung gelöst.

Gemäß der Erfindung wird vorgeschlagen, eine maschinell bzw. werksseitig vorgefertigte und in Schalungen hergestellte plattenförmige Schicht aus einem Sanierungsputz herzustellen, wobei die Zusammensetzung der Platte, wie bei den üblichen Sanierungsputzen jeweils den Anforderungen des Untergrunds entsprechend zusammengesetzt ist. Im Zuge der Herstellung findet eine selbstständige Luftporenbildung statt, die dafür sorgt, dass zumindest ein Luftporengehalt von 25 % vorhanden ist. Je nach Anforderung und Mischungsverhältnisses kann die Luftporenbildung noch vergrößert sein.

Die Baustoffplatte hat die Aufgabe Mauersalze zu binden oder zusammen oder aus dem Untergrund aufzunehmen. Sie ist dampfdurchlässig je nach Anforderung und Mischungsverhältnis der enthaltenen Stoffe. Zusätzlich kann die Baustoffplatte als Oberfläche für weitere Beschichtungen dienen oder bereits von der Oberflächenstruktur so ausgebildet sein, dass eine weitere Bearbeitung der dem Innenraum zugewandten Seite nicht erforderlich ist. Demzufolge kann die Oberfläche entweder glatt oder rau und strukturiert sein.

Die Vorteile einer derartigen Baustoffplatte sind gravierend. Durch eine vorgefertigte Baustoffplatte, die in handelsüblichen und handbaren Abmessung gefertigt ist und mit anderen gleichartigen Baustoffplatten auf eine sanierungsbedürftige Wand oder Mauerwerk aufgebracht wird, verkürzt sich die Bauzeit erheblich, da keine Austrocknungszeiten für verschiedene Schichten notwendig ist. Darüber hinaus sind keine Putzmaschineneinsätze erforderlich und die gesundheitsgefährdenden Arbeiten werden enorm reduziert. Der gesamte Aufbau kann energieschonend hergestellt werden, da keine Trocknungsgerätschaften mehr nötig sind. Die Baustoffplatte kann unter kontrollierten und immer gleichbleibenden Bedingungen in Schalungen hergestellt werden. Es ist immer eine Einhaltung der Mindestputzstärke auch an den schwächsten Stellen sichergestellt. Da die Platte trocken ist, wenn sie aufgebracht wird, findet keine bzw. mindestens eine 90 % geringere Feuchtigkeitszufuhr in die geschädigten Bauteile statt, so dass damit die effektive Entsalzungsleistung gefördert wird. Die Baustellenkosten werden verringert und es ist kein Auszug der Bewohner notwendig, da die Platte auch in bewohnten Räumen aufgebracht werden kann und Belastungen durch Bauarbeiten mit extremer Staub- und Geruchsbelastung entfallen. Die Baustoffplatte kann auch partiell, lokal und temporär auf geschädigte Teile aufgebracht werden, ohne eine ganze Wand in die Sanierung einzubeziehen. Da nach einer gewissen Zeit die Platten gesättigt sind, kann ein Austausch von gesättigten Platten vorgenommen werden, wobei es hierbei unter Umständen nicht erforderlich ist, alle Platten einer Wand auszutauschen. Durch die Platten erfolgt eine Erhöhung der unmittelbaren Oberflächentemperatur der Innenwandseite bei Außenbauteilen, wenn entsprechende Leichtzuschläge zugegeben werden, so dass dadurch eine geringere Kondensatbildung an den Außenwänden erfolgt. Eine Montage der Platten ist unter Beachtung einer Montageanleitung auch für Laien möglich. Durch entsprechende Leichtzuschläge kann die Baustoffplatte wärmedämmend ausgebildet werden, so dass geringere Oberflächentemperaturen an der Innenseite von Außenwänden und dadurch weniger Schimmelpilzbildung als bei der Verwendung von Sanierputzen eintritt.

Infolge dessen ist die Baustoffplatte vorzugsweise aus einem Material aus Zement und/oder Portlandzement, Calciumhydroxid, mineralischen Bindemitteln, Quarz und Zuschlagstoffen zusammengesetzt und weist ein Luftporengehalt von mindestens 25 % auf. Zusätzlich weist sie mindestens ein Gewebe zur Stabilisierung auf. Ob Zement und/oder Portlandzement verwendet wird, richtet sich nach den Erfordernissen für die Entsalzung. Mineralische Bindemittel sind unter anderem auch der Portlandzement sowie beispielsweise Kalk. Quarz wird in der Form von Quarzsand, der auch als Quarzglas bezeichnet wird, eingesetzt. Die Materialien der Baustoffplatte entsprechen den bekannten Materialien für die Entsalzung von Mauerwerk, wobei die Zusammensetzung auf den speziellen Anwendungsfall abgestimmt ist.

Zur Stabilisierung der Baustoffplatte kann zweckmäßigerweise als Trägermaterial und Armierung eine Gewebeeinlage aus Glasfaser, Kunstfaser oder ähnlichen geeigneten Werkstoffen enthalten sein.

Gemäß einer weiteren Ausbildung kann das Material zusätzlich Aluminium zur weiteren Luftporenbildung enthalten. Je nach individuellen Anforderungen kann das Material vorzugsweise auch Farbstoffe enthalten, so dass die Baustoffplatte durchgängig gefärbt ist. In einer weiteren vorteilhaften Ausgestaltung der Erfindung ist der Luftporengehalt innerhalb des Querschnitts von einer Flachseite zur anderen Flachseite erhöht, um die Entsalzung gezielt zu steuern.

Zwecksmäßigerweise kann eine Schicht mit geringerem Porenanteil und eine Schicht mit einem höheren Porenanteil, der vorzugsweise größer 40 % ist, vorgesehen werden. Eine derart zweischichtige Platte sollte auf stark versalzenem Mauerwerk eingesetzt werden. Dabei ist ein höheres Porenvolumen als üblich nötig, um eine Haltbarkeit von ca. 10 Jahren sicherzustellen.

In einer weiteren Ausbildung ist vorgesehen, auf einer Flachseite eine Beschichtung aufzubringen, die vorzugsweise eine Wärmedämmsicht oder Wärmedämmplatte ist. Zusätzlich kann auch eine Dämmsperre vorhanden sein. Auch kann eine Platte mit/ohne zusätzlicher Dämmschicht bereits werkseitig mit Abdichtungsebene versehen sein. Vorzugsweise kann auch eine eingefärbte Schicht bei einer Schichtplatte vorgesehen sein.

Mit dem plattenförmigen Baustoff wird die Verdunstungszone von der Wandoberfläche in den Querschnitt der Baustoffplatte verlegt.

Eine derartige Baustoffplatte kann als Entsalzungsplatte, Kompressionsputzplatte, Sockelsanierplatte oder Opferschutzplatte entsprechend den Anwendungsfällen, wie sie auch bei Sanierungsputzen bekannt sind (Entsalzungsputz, Kompressionsputz, Sockelsanierungsputz, Opferputz) aufgebaut und eingesetzt werden.

Weitere Merkmale der Erfindung ergeben sich aus der folgenden Beschreibung der Ausführungsbeispiele der Erfindung in Verbindung mit den Ansprüchen und den Zeichnungen. Die einzelnen Merkmale können je für sich oder zu mehreren bei Ausführungsformen der Erfindung verwirklicht sein. Es stellen dar:
- Figur 1: ein Querschnitt durch ein sanierungsbedürftiges Mauerwerk mit einer normalen Putzschicht;
- Figur 2: ein Querschnitt durch ein sanierungsbedürftiges Mauerwerk mit einer Baustoffplatte für die Entsalzung;
- Figur 3: eine Ausschnittvergrößerung eines geschädigten Mauerwerks mit einer Baustoffplatte aus zwei Schichten; und
- Figur 4: eine Schnittdarstellung durch ein Mauerwerk mit Fundament und verschiedenen vertikal geschädigten Mauerbereichen.

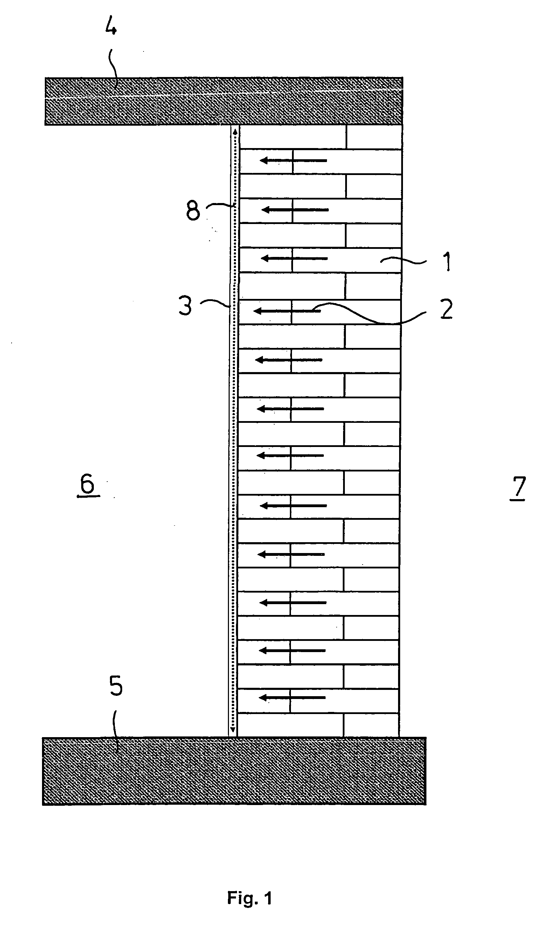

Figur 1 zeigt ein salzgeschädigtes Mauerwerk 1 zwischen einer Bodenplatte 5 und einer Geschossdecke 4. Auf der dem Innenraum 6 zugewandten Seite befindet sich ein normaler Putz 3, durch den die in dem Mauerwerk in Pfeilrichtung 2 wandernden Salze austreten. Die Salze bewegen sich von der dem Außenbereich 7 zugewandten Seite des Mauerwerks 1 zu der dem wärmeren Innenraum 6 zugewandten Seite. Der Grad der Versalzung nimmt somit in Richtung Innenraum 6 zu.

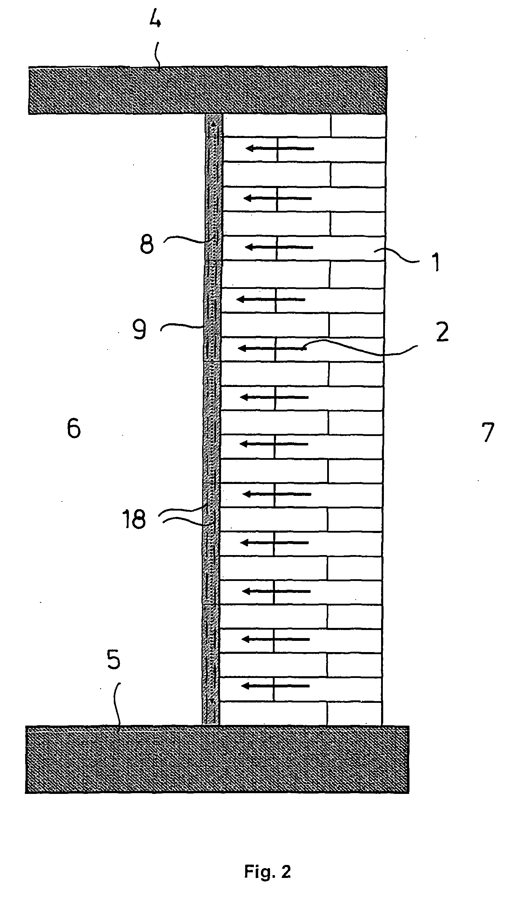

In Figur 2 befindet sich anstelle des Putzes 3 gemäß Figur 1 eine Baustoffplatte 9 gemäß der Erfindung. Die Verdunstungszone 8, die in Figur 1 noch in dem dünnen Putzauftrag 3 bzw. außerhalb des Putzauftrages sich befindet, liegt bei der Verwendung der Baustoffplatte 9 im Inneren der Baustoffplatte. Die in dem Mauerwerk wandernden Salze können in der Baustoffplatte 9 aufgenommen werden, bis sie gesättigt ist. Dann ist ein Austausch erforderlich. Im Inneren der Baustoffplatte 9 befinden sich zwei voneinander beabstandete Gewebe 18 aus Glasfasern.

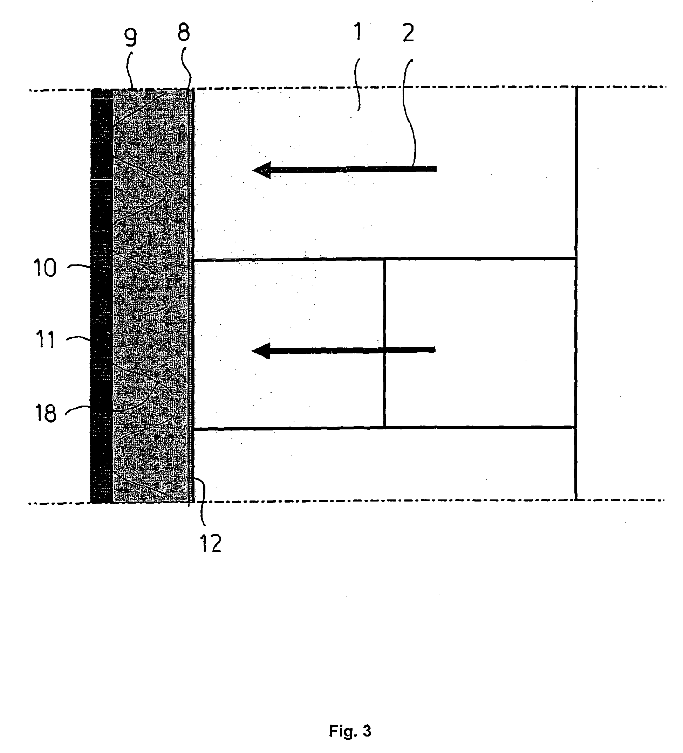

In der Figur 3 ist eine Baustoffplatte 9 dargestellt, die als Schichtplatte ausgebildet ist, und eine dem Innenraum zugewandte dichtere Oberschicht mit einem geringeren Porenanteil von 25 % und eine dem Mauerwerk zugewandte offenporige Schicht 11 mit einem Porenanteil größer 40 % aufweist. Insbesondere die offenporige Schicht 11 dient der Aufnahme der aus dem Mauerwerk 1 austretenden Salze. Die Dicke der Baustoffplatte beträgt in einem Ausführungsbeispiel 15 bis 400 mm. Bei dieser Ausführung ist das Gewebe 18 gewellt mit einer Lage in die Baustoffplatte 9 eingebracht.

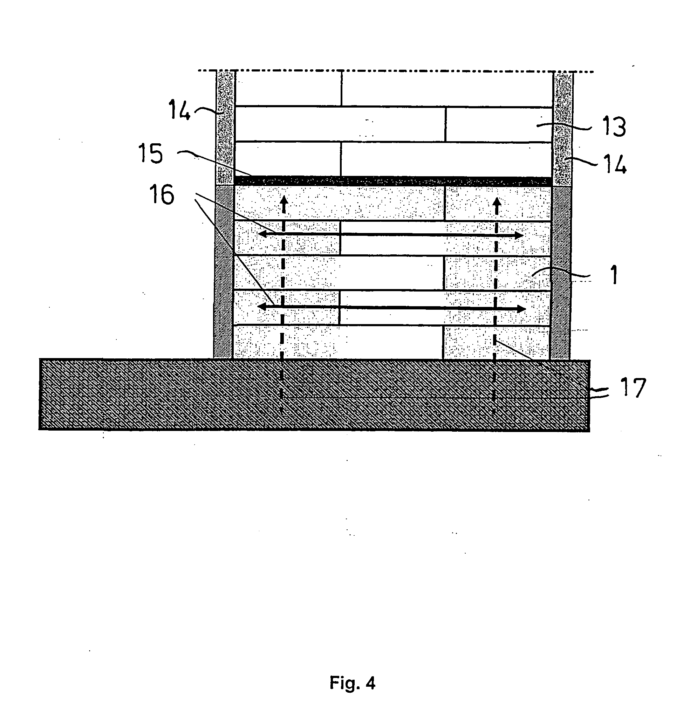

In Figur 4 besteht das Mauerwerk aus einem salzgeschädigten Bereich 1 und einen intakten Mauerwerkbereich 13. Zwischen den beiden Mauerwerksbereichen befindet sich eine intakte Horizontalsperre 15, die die Wanderung von Feuchtigkeit in den intakten Mauerwerksbereich 13 verhindert. Auf dem intakten Mauerwerk 13 befindet sich innen und außen ein intakter ungeschädigter Putz 14. Hier ist auf beiden Seiten des selbstgeschädigten Mauerwerks 1 eine Baustoffplatte 9 bzw. 9' aufgebracht, die die nach innen und außen wandernden Salze gemäß Pfeil 16 aufnehmen kann. Mit Pfeil 17 ist die bis zur Horizontalsperre 15 wandernde aufsteigende Feuchtigkeit bezeichnet. Der Grad der Versalzung ist in den Bereichen angrenzend an die Horizontalsperre 15 und die beiden Baustoffplatten 9, 9' höher als im Inneren des salzgeschädigten Mauerwerks 1.

Die erfindungsgemäße Baustoffplatte 9 aus einer einheitlichen Materialschicht wird derart hergestellt, dass beispielsweise in einem Rahmen zur Abschalung und Bestimmung der Größe der Platte auf einem Plattentisch eine erste Schicht des entsprechend zusammengesetzten Materials aufgebracht wird, nach leichtem Antrocknen ein Gewebe, beispielsweise aus Glasfaser oder anderen geeigneten Materialien eingelegt wird. Nach dem Einbringen von weiterem Material wird ein zweites Gewebe 18 eingelegt und anschließend zur Herstellung der endgültigen Dicke der Baustoffplatte auf dieses Gewebe 18 die letzte Materialschicht aufgebracht wird. Bei einer mehrschichtigen Baustoffplatte wird das Gewebe 18 gewellt eingelegt und am Rand des Rahmens fixiert, nachdem eine erste Lage Material angehärtet ist. Anschließend werden die verschiedenen weiteren Materialien zugegeben. Das gewellte Gewebe 18 kann auch zusätzlich zu den beiden vorstehend erwähnten Lagen zwischen diesen angeordnet sein.

Eine derartige Baustoffplatte kann als temporäre Maßnahme zur Senkung des Salzgehaltes im Untergrund eingesetzt werden. Es handelt sich hierbei um ein hoch sulfatbeständiges Bauteil mit Tensid-Luftporen. Mit dieser Baustoffplatte ist eine Entsalzung von Sockel- und Wandbereichen im Innen- und Außenbereich von Gebäuden bei Kloried- und/oder Sulfat und/oder Nitratversalzung und/oder hoher Salzbelastung möglich. Die Baustoffplatte ermöglicht außerdem die kosmetische Gestaltung von Außen- und Innenbereichen inklusive Entsalzungsfunktion. Das Mischungsverhältnis des Materials der Baustoffplatte richtet sich nach den Anforderungen für die Entsalzung.

## Patentansprüche

1. Baustoffplatte (9) zum Aufbringen auf ein Mauerwerk (1), **dadurch gekennzeichnet, dass** die Baustoffplatte (9) ein für die Entsalzung des Mauerwerks (1) geeignetes Material enthält.

2. Baustoffplatte nach Anspruch 1, **dadurch gekennzeichnet, dass** das Material aus Zement und/oder Portlandzement, Calciumhydroxid, mineralischen Bindemitteln, Quarz und Zuschlagsstoffen zusammengesetzt und im Inneren eine Gewebeeinlage (18) angeordnet ist, und ein Luftporengehalt von mindestens 25 % aufweist.

3. Baustoffplatte nach Anspruch 2, **dadurch gekennzeichnet, dass** als Trägermaterial und Armierung eine Gewebeeinlage (18) aus Glasfaser, Kunstfaser oder ähnlichen Materialien enthalten ist.

4. Baustoffplatte nach einem der vorangegangenen Ansprüche, **dadurch gekennzeichnet, dass** das Material zusätzlich Aluminium und/oder Farbstoffe enthält.

5. Baustoffplatte nach Anspruch 4, **dadurch gekennzeichnet, dass** der Luftporengehalt sich innerhalb des Querschnitts der Baustoffplatte von einer Flachseite zur anderen Flachseite erhöht.

6. Baustoffplatte nach Anspruch 6, **dadurch gekennzeichnet, dass** eine Schicht (10) mit geringerem Porenanteil und eine Schicht (11) mit höherem Porenanteil, vorzugsweise größer 40 % vorgesehen ist.

7. Baustoffplatte nach einem der vorangegangenen Ansprüche, **dadurch gekennzeichnet, dass** auf mindestens einer Flachseite eine Beschichtung aufgebracht ist.

8. Verwendung eines plattenförmigen Baustoffes (9, 9') mit Entsalzungseigenschaften auf sanierungsbedürftigem Mauerwerk (1) um im Mauerwerk (1) vorhandene Salze aufzunehmen.

9. Verwendung eines plattenförmigen Baustoffes (9, 9') zu Verlagerung der Verdunstungszone an der Oberfläche von sanierungsbedürftigem Mauerwerk (9, 9') in den Querschnitt des plattenförmigen Baustoffes (9, 9').

10. Verfahren zum Entsalzen eines sanierungsbedürftigen Mauerwerks, **gekennzeichnet durch**
Herstellen einer Baustoffplatte (9, 9') aus einem Sanierungsputz, und
Aufbringen der Baustoffplatte (9, 9') zumindest auf der einen Innenraum (6) zugewandten Seite des Mauerwerks (1).

11. Verfahren nach Anspruch 1, **dadurch gekennzeichnet, dass** zusätzliche Baustoffplatten (9, 9') auf die dem Außenbereich (7) des Mauerwerks (1) zugewandten Seite aufgebracht werden.

12. Verfahren nach Anspruch 9 oder 10, **dadurch gekennzeichnet, dass** der Luftporengehalt der Baustoffplatten (9, 9') sich innerhalb des Querschnitts von einer Flachseite zur anderen Flachseite erhöht wird, wobei der höhere Luftporengehalt dem Mauerwerk (1) zugewandt ist.

13. Verfahren nach einem der vorangegangenen Ansprüche, 9 bis 12, **dadurch gekennzeichnet, dass** die Verdunstungszone (8) in den Querschnitt der Baustoffplatten (9) veriegt wird.
